# EUROPEAN PATENT SPECIFICATION

(11) **EP 2 391 206 B1**
(45) Date of publication and mention of the grant of the patent: **08.10.2014**
(21) Application number: 10701029.0
(22) Date of filing: 26.01.2010
(51) Int. Cl.: A01N 47/02, A01N 25/24, A01N 25/00, A01P 3/00, A01P 7/00, A01P 13/00

(54) **METHOD FOR DRESSING SEEDS**
Verfahren zur Behandlung von Saatgut
Procédé d'enrobage des semences

(30) Priority: 27.01.2009 EP 09151392; 11.02.2009 EP 09152530
(43) Date of publication of application: 07.12.2011
(73) Proprietor: BASF SE, 67056 Ludwigshafen (DE)
(72) Inventor: SCHLOTTERBECK, Ulf, 68165 Mannheim (DE); HOFSCHEUER, Doris, 67117 Limburgerhof (DE); ISRAELS, Rafel, 50674 Köln (DE); LANDES, Andreas, 67354 Römerberg (DE)
(86) International application number: PCT/EP2010/050856
(87) International publication number: WO 2010/086303

(56) References cited:
- EP-A- 0 187 341
- WO-A-98/44912
- JP-A- 2001 139 870
- US-A1- 2008 103 044

## Description

One of the problems occurring with plant propagation materials treated with formulations comprising pesticides is dust development, which can lead to environmental problems.

Dust is generated all the times plant propagation materials are moved after drying - i.e. at the bagging ("Absackung") of the plant propagation materials, during handling and transportation of the plant propagation materials and during sowing.
Besides parts from the plant propagation materials (rubbed off during handling), other plant parts like spelt parts that were not fully removed during plant propagation material cleaning, the dust may comprise partly also pesticides present in the seed treatment formulation rubbed off during handling of treated plant propagation materials.

To avoid or reduce the development of dust comprising pesticides, seed treatment formulation often comprise specified polymers (sticker) that ensure adhesion of the pesticides to the respective plant propagation material.

In addition, stickers may negatively influence properties of the treated seed important to the customer, such as unwanted accumulation (clustering) of plant propagation material parts, which has direct impact on the flowability of the plant propagation materials.

Potential consequences of negatively affected flowablilty are problems with plant propagation material handling in the factory (transport, bagging, e.g. for processes used for cereals) and/or reduction of "sowability", i.e. the precision of the planting with state of the art machinery (pneumatic sowing machines as used for row crops like corn, soybean or sunflower).
The last part is very important for row crops, whereas the plant propagation material flow in the factory is more of an issue with cereals.

A further problem is that the amount of liquid that can be applied to the plant propagation material is limited. Therefore, there is a need for stickers with high performance at low dose rates.

A further problem that may occur with stickers is the adhesion of the formulation not only to the plant propagation materials, but also to the machineries used in seed treatment, leading to more effort needed for machine cleaning.

A further problem that may occur with stickers is that they negatively affect the seed vitality. Seed vitality (vigor) manifests itself in a variety of factors. Examples of factors which are manifestations of the plant's vitality are:
(a) overall visual appearance;
(b) root growth and/or root development;
(c) size of the leaf area;
(d) intensity of the leaves' green coloration;
(e) number of dead leaves in the vicinity of the ground;
(f) plant height;
(g) plant weight;
(h) growth rate;
(i) plant stand density;
(j) germination behavior;
(k) emergence behavior;
(l) shoot number;
(m) shoot type (quality and productivity)
(n) toughness of the plant, for example resistance to biotic or abiotic stress;
(o) presence of necroses;
(p) senescence behavior.

Preferably, the term " Seed vitality (vigor)" denotes plant stand density, storability of seeds and/or germination behavior.

A further object of various efforts in crop protection is to increase the yield of plants. "Yield" is to be understood as any plant product of economic value that is produced by the plant such as grains, fruits in the proper sense, vegetables, nuts, grains, seeds, wood (e.g. in the case of silviculture plants) or even flowers (e.g. in the case of gardening plants, ornamentals). The plant products may in addition be further utilized and/or processed after harvesting.

According to the present invention, "increased yield" of a plant, in particular of an agricultural, silvicultural and/or horticultural plant, preferably agricultural plant means that the yield of a product of the respective plant is increased by a measurable amount over the yield of the same product of the plant produced under the same conditions, but without the application of the mixture according to the invention.

Increased yield can be characterized, among others, by following improved properties of the plant:
- increased plant weight
- increased plant height
- increased biomass such as higher overall fresh weight (FW)
- higher grain yield
- more tillers
- larger leaves
- increased shoot growth
- increased protein content
- increased oil content
- increased starch content
- increased pigment content.

According to the present invention, the yield is increased by at least 2 %, preferable by at least 4 %, more preferred by at least 8 %, even more preferred by at least 16 %).

Although there are several sticker described in prior art partially fulfilling these needs (see for example US 20080103044), there is the constant need to improve the overall properties of seed treatment formulations.

Thus, the object of the present invention was to provide seed treatment formulations comprising stickers enabling dust reduction in combination with a maintenance or improvement of seed vitality (vigor) - in particular plant stand density, storability of seeds and/or germination behavior - and/or satisfactory flowability and/or little adhesion of the resulting formulation on machineries used in the seed treatment process and/or reduction of dose rate and/or increasing the yield.

The object is solved by a method comprising treating plant propagation material, preferably seeds with at least one sticker as defined below.

This method provides reduction of dust. Preferably, besides reduction of dust, the method also preferably provides
1) maintaining or improving the seed vitality (vigor), in particular plant stand density, storability of seeds and/or germination behaviour; and/or
2) maintaining flowability of the treated seeds and/or
3) reducing adhesion of the resulting formulation on machineries used in the seed treatment process and/or
4) reducing the dose rate of the sticker compared to current standards; and/or
5) increasing the yield of plants.

Preferably, the sticker is applied in combination with at least one pesticide. Herein, the sticker and the at least one pesticide are applied simultaneously, that is jointly or separately, or in succession.

The glass transition temperature of the polymers is determined by differential scanning calorimeter (DSC). All samples were dried at 110°C for one hour to eliminate the effect of water/solvent on Tg of copolymers. DSC sample size is about 10-15 mg. The measurement is usually carried out from 100°C to 100°C at 20°C/min under N₂-atomosphere. The Tg is determined by midpoint of the transition region.

The sticker comprises
a) a mixture of acrylic acid and acrylamide as comonomer a); and
b) styrene as comonomer b); and
c) n-butyl acrylate as comonomer c;
in polymerized form, wherein the sticker comprises
from 0.05 to 20% by weight of comonomer a), and
from 10 to 90% by weight of comonomer b); and
from 10 to 90% by weight of comonomer c).

Preferably, the sticker has a Tg between of -30 to +30°C, more preferably of -20 to +28°C, in particular +15 to +28°C.

This embodiment is hereinafter referred to as "sticker VII".

Preferably, the sticker according to the invention comprises 0.1 to 10% by weight, in particular 0.5 to 8% by weight of comonomer a).

Preferably, the sticker according to the invention comprises 15 to 70% by weight, more preferably 18 to 55% by weight, in particular 20 to 55 % by weight % by weight of comonomer b).

Preferably, the sticker according to the invention comprises 40 to 85% by weight of comonomer c).

All embodiments of the stickers set forth above are hereinbelow referred to as "sticker according to the invention".

The sticker according to the present invention can be prepared according to methods known in the art, for example in analogy to the processes described in EP 1077237 A, EP 0810274 A or US 6790272.

The present invention also relates to the use of a sticker according to the invention for the treatment of seeds.

In a preferred embodiment, the sticker is present in the form of an aqueous dispersion. As a result of their preparation, stickers present in form of an aqueous dispersion generally contain emulsifiers which serve to stabilize the polymer particles in the aqoeus dispersion. Thus, they may comprise at least one anionic emulsifier and/or at least one nonionic emulsifier. Appropriate emulsifiers are the compounds commonly used for such purposes. An overview of appropriate emulsifiers can be found in Houben-Weyl, Methoden der organischen Chemie, volume XIV/1, Makromolekulare Stoffe [Macromolecular Substances], Georg-Thieme-Verlag, Stuttgart, 1961, pp. 192-208.

Preferred anionic emulsifiers include alkali metal salts and ammonium salts, especially the sodium salts, of alkyl sulfates (wherein the alkyl moiety is C₈ -C₂₀-alkyl), of sulfuric monoesters with ethoxylated alkanols (average degree of ethoxylation: from 2 to 50, alkyl moiety: C₁₀ -C₂₀), and of alkylsulfonic acids (alkyl moiety: C₁₀ -C₂₀), and also mono- and di-(C.sub.4 -C.sub.24 alkyl)diphenyl ether disulfonates of the formula I 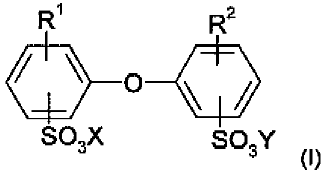 in which R¹ and R² are hydrogen or C₄ -C₂₄ alkyl, preferably C₈ -C₁₆ alkyl, but are not simultaneously hydrogen, and X and Y may be alkali metal ions and/or ammonium ions. It is common to use technical mixtures containing a fraction of from 50 to 90% by weight of monoalkylated product, an example being Dawfax^{®}2A1 (R¹ =C₁₂ alkyl; DOW CHEMICAL). The compounds I are general knowledge, for example, from U.S. Pat. No. 4,269,749, and are obtainable commercially.

Further preferred anionic emulsifiers are the C₁₀ -C₁₈ alkyl sulfates and the sulfates of ethoxylated C₁₀ -C₂₀ alkanols having a degree of ethoxylation of ≤5, and also the mono- and di(C₈ -C₁₆)diphenyl ether disulfonates.

In general, the aqueous dispersion may comprise from 0.1 to 5% by weight, preferably from 0.5 to 3% by weight, and in particular from about 1 to 2% by weight, of anionic emulsifiers, based on the total weight of the binder.

Preferred nonionic emulsifiers are aliphatic nonionic emulsifiers, examples being ethoxylated long-chain alcohols (average degree of ethoxylation: from 3 to 50, alkyl: C₈-C₃₆) and polyethylene oxide/polypropylene oxide block copolymers. Preference is given to ethoxylates of long-chain alkanols (alkyl: C₁₀ -C₂₂, average degree of ethoxylation: from 3 to 50) and, of these, particular preference to those based on naturally occurring alcohols or oxo alcohols having a linear or branched C₁₂ -C₁₈ alkyl radical and a degreee of ethoxylation of from 8 to 50. Particularly preferred nonionic emulsifiers are the ethoxylates of oxo alcohols having a branched C₁₀ -C₁₆ alkyl radical and an average degree of ethoxylation in the range from 8 to 20, and also fatty alcohol ethoxylates having a linear C₁₄ -C₁₈ alkyl radical and an average degree of ethoxylation in the range from 10 to 30. Nonionic emulsifiers are used normally in an amount of from 0.1 to 5% by weight, in particular from 0.3 to 3% by weight, and especially in the range from 0.5 to 2% by weight, based on the total weight of the binder. Preferably, the total amount of anionic and nonionic emulsifier will not exceed 5% by weight, based on the total weight of the binder, and in particular is in the range from 0.5 to 4% by weight.

The particle sizes of the sticker if present in the form of a dispersion given here are weight-average particle sizes, such as can be determined by dynamic light scattering. Methods for this are familiar to a person skilled in the art, for example from H. Wiese in D. Distler, Wässrige Polymerdispersionen [Aqueous polymer dispersions], Wiley-VCH, 1999, chapter 4.2.1, p. 40ff, and the literature cited therein, and also H. Auweter and D. Horn, J. Colloid Interf. Sci., 105 (1985), 399, D. Lilge and D. Horn, Colloid Polym. Sci., 269 (1991), 704, or H. Wiese and D. Horn, J. Chem. Phys., 94 (1991), 6429. The particle size of the sticker according to the invention is from 5 to 800 nm, preferably 10 to 200 nm.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. Preferably, the term plant seed denotes seeds.

Useful for the present invention is the seed of various cultivated plants, for example cereals such as wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, oil seed rape / canola, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers, preferably corn, sunflower, cereals such as wheat, rye, barley, triticale, oats or rice, soybean, cotton, oil seed rape / canola more preferably corn, sunflower, soybean, cereals such as wheat, rye, barley, triticale, oats or rice.

The term "cultivated plants" is to be understood as including plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.
Plants that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield^{®} summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady^{®} (glyphosate-tolerant, Monsanto, U.S.A.) and LibertyLink^{®} (glufosinate-tolerant, Bayer CropScience, Germany).
Furthermore, plants are also covered that are by the use of recombinant DNA techniques capable to synthesize one or more insecticidal proteins, especially those known from the bacterial genus *Bacillus*, particularly from *Bacillus thuringiensis*, such as δ-endotoxins, e. g. CrylA(b), CrylA(c), CrylF, CrylF(a2), CryllA(b), CrylllA, CrylllB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard^{®} (corn cultivars producing the Cry1Ab toxin), YieldGard^{®} Plus (corn cultivars producing Cry1Ab and Cry3Bb1 toxins), Starting^{®} (corn cultivars producing the Cry9c toxin), Herculex^{®} RW (corn cultivars producing Cry34Ab1, Cry35Ab1 and the enzyme Phosphino-thricin-N-Acetyltransferase [PAT]); NuCOTN^{®} 33B (cotton cultivars producing the Cry1Ac toxin), Bollgard^{®} I (cotton cultivars producing the Cry1Ac toxin), Bollgard^{®} II (cotton cultivars producing Cry1Ac and Cry2Ab2 toxins); VIPCOT^{®} (cotton cultivars producing a VIP-toxin); NewLeaf^{®} (potato cultivars producing the Cry3A toxin); Bt-Xtra^{®}, NatureGard^{®}, KnockOut^{®}, BiteGard^{®}, Protecta^{®}, Bt11 (e. g. Agrisure^{®} CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1 F toxin and PAT enzyme).
Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g.
EP-A 392 225), plant disease resistance genes (e. g. potato cultivars, which express resistance genes acting against *Phytophfhora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.
Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.
Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera^{®} rape, DOW Agro Sciences, Canada).
Furthermore, plants are also covered that contain by the use of recombinant DNA techniques a modified amount of substances of content or new substances of content, specifically to improve raw material production, e. g. potatoes that produce increased amounts of amylopectin (e. g. Amflora^{®} potato, BASF SE, Germany).

The sticker according to the present invention can be used individually or can be converted together with at least one pesticide and formulation auxiliaries into customary formulations or can be present in a kit of parts comprising
a) a sticker according to the invention as part I, and
b) an agrochemical formulation comprising at least one pesticide, but not comprising the sticker according to the invention as part II.

Alternatively, the sticker according to the invention can be used together with an agro-chemical formulation comprising at least one pesticide, but not comprising the sticker according to the invention. Herein, the sticker according to the present invention can be added to a commercial available agrochemical formulation, or applied to the seed together with the formulated pesticide. Herein, the sticker and the at least one pesticide, which is present in a commercial available agrochemical formulation, can be applied simultaneously, that is jointly or separately, or in succession to the seed.

Examples of customary formulations useful in the field of seed treatment are, for example solutions, emulsions and suspensions.

The present invention furthermore comprises agrochemical formulations comprising at least one pesticide and at least one sticker wherein the sticker is sticker VII.

A further embodiment of the present invention is a kit of parts comprising
a) a sticker VII, and
b) an agrochemical formulation comprising at least one pesticide, but not comprising the sticker VII as part II;

The kit of part may also optionally additionally comprise one or more agrochemical formulation comprising at least one pesticide, but not comprising the sticker according to the invention as part III.

The respective formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 and ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).
These formulations may also comprise besides the stickers according to the invention other auxiliaries which are customary in agrochemical formulations. The auxiliaries used depend on the particular application form and the pesticide, respectively. Examples for suitable auxiliaries are solvents, carriers, surfactants (such as dispersants, emulsifiers, further solubilizers and adhesion agents), protective colloids, organic and inorganic thickeners, bactericides, anti-freezing agents, anti-foaming agents and if appropriate colorants.
Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.
Carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.
Suitable surfactants (adjuvants, wetters, dispersants or emulsifiers) are alkali metal, alkaline earth metal and ammonium salts of aromatic sulfonic acids, such as ligninsoul-fonic acid (Borresperse® types, Borregard, Norway) phenolsulfonic acid, naphtha-lenesulfonic acid (Morwet® types, Akzo Nobel, U.S.A.), dibutylnaphthalene-sulfonic acid (Nekal® types, BASF, Germany),and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Swit-zerland), polycarboxylates (Sokolan® types, BASF, Germany), polyalkoxylates, polyvinylamines (Lupasol® types, BASF, Germany), polyvinylpyrrolidone and the copolymers therof.
Examples for thickeners (i. e. compounds that impart a modified flowability to formulations, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).
Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).
Examples for suitable anti-freezing agents are ethylene glycol, propylene glycol, urea and glycerin.
Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.
Suitable colorants are pigments of low water solubility and water-soluble dyes. Examples to be mentioned und the designations rhodamin B, solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108, acid red 18 = food red 7, food red 1.

Formulation types, which are especially useful for seed treatment are including, but not limited to soluble concentrates (LS), emulsions (ES), suspensions FS), -water-dispersible powders and water-soluble powders (WS), and dustable powders (DS).

The amount of pesticide in the formulation depends on the formulation type. Principally, the agrochemical formulations generally comprise between 0.01 and 95%, preferably between 0.1 and 90%, most preferably between 0.5 and 90%, by weight of the pesticide.

For example, in the liquid fomulations (as set forth above), the amount of the at least one pesticide is usually in the range from 2 to 70% by weight.

In the solid formulations (as set forth above), the amount of the at least one pesticide is usually in the range from 10 to 70% by weight, in particular in the range from 15 to 50% by weight, based on the total weight of the solid formulation.

The total amount of formulation auxiliaries depends on the type of formulation used. Generally, it varies from 30 to 90% by weight, in particular from 85 to 50% by weight based on the total weight of the formulation.

In particular, the amount of surfactants varies depending on the formulation type. Usually, it is in the range from 0.1 to 20% by weight, in particular from 0,2 to 15% by weight and particularly preferably from 0,5 to 10% by weight based on the total weight of the formulation.

The amount of carriers and solvents varies depending on the formulation type. Usually, it is in the range from 1 to 90 % by weight, in particular from 10 to 60 % by weight and particularly preferably from 15 to 50 % by weight based on the total weight of the formulation.

The amount of the remaining formulation auxiliaries (viscosity-modifying additives (thickeners), antifoam agents, antifreeze agents, agents for adjusting the pH, stabilizers, anticaking agents and biocides (preservatives), colorants, stickers, fillers, and plasticizers) varies depending on the formulation type. Usually, it is in the range from 0,1 to 60 % by weight, in particular from 0,5 to 40 % by weight and particularly preferably from 1 to 20 % by weight based on the total weight of the formulation.

The amount of stickers will usually not exceed 40% by weight of the formulation and preferably ranges from 1 to 40% by weight, and in particular in the range from 5 to 30% by weight, based on the total weight of the formulation. Preferably, the ratio by weight of sticker and pesticide is from 1:10 to 2:1, more preferably 1:5 to 1,5:1.

These formulations can be applied to plant propagation materials, particularly seeds, diluted or undiluted. The compositions in question give, after two-to-tenfold dilution, pesticide concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the sticker according to the invention or formulations comprising the sticker according to the invention, respectively, are applied on to the plant propagation material by a method such that germination is not induced, e. g. by seed dressing, pelleting, coating and dusting.

In the treatment of plant propagation material (preferably seed), the application rates of the sticker according to the invention are generally in the range of 10 to 500g/100kg plant propagation material (preferably seed), preferably 20 - 200g/100kg plant propagation material (preferably seed)

The invention also relates to the plant propagation material (preferably seed) comprising, that is, coated with and/or containing, a sticker according to the invention, wherein the sticker is sticker VII.

The invention also relates to the plant propagation material (preferably seed) comprising, that is, coated with and/or containing, a sticker according to the invention, wherein the sticker is sticker VII;
and at least one pesticide.

The plant propagation material (preferably seed) comprises the at least one pesticide in an amount of from 0.1 g to 10 kg per 100 kg of plant propagation material (preferably seed), preferably 0.1 g to 1 kg per 100 kg of plant propagation material (preferably seed).

In those embodiments where more than two components (sticker according to the invention; pesticide and further formulation auxiliaries) are provided in form of a kit of parts as defined above, some of the individual components may already be combined together and as such are packaged (as customary formulations) in a single container such as a vial, bottle, can, pouch, or canister, drum.
In other embodiments, two or more components of a kit may be packaged separately, i. e., not pre-formulated. As such, kits may include two or more separate containers such as vials, cans, bottles, pouches, or canisters, each container containing a separate component for an agrochemical composition.

In both forms, a component of the kit may be applied separately from or together with the further components or as a component of a combination composition according to the invention for preparing the composition according to the invention.

According to one embodiment, the kit comprising the sticker according to the invention can be mixed with at least one customary formulation prior to applying them to the plant propagation material (preferably seed) or it can be applied step by step, treating the plant propagation material (preferably seed) at first with the formulation, followed by applying the sticker (optionally together with further auxiliaries, if appropriate), or the other way round, i.e. sticker followed by formulation, or consecutive treatment, if more than one agrochemical formulation is used (i.e. formulation followed by sticker, followed by formulation; formulation followed by formulation II followed by sticker, sticker, followed by formulation I, II, etc)..

The term "at least one pesticide" within the meaning of the invention states that one or more compounds can be selected from the group consisting of fungicides, insecticides, nematicides, herbicide and/or safener or growth regulator, preferably from the group consisting of fungicides, insecticides or nematicides. Also mixtures of pesticides of two or more the aforementioned classes can be used. The skilled artisan is familiar with such pesticides, which can be, for example, found in the Pesticide Manual, 13th Ed. (2003), The British Crop Protection Council, London.

The following list of pesticides is intended to illustrate the possible combinations, but not to impose any limitation:
Fungicides, comprising
   A) strobilurins
      azoxystrobin, dimoxystrobin, enestroburin, fluoxastrobin, kresoxim-methyl, meto-minostrobin, orysastrobin, picoxystrobin, pyraclostrobin, pyribencarb, trifloxystrobin, 2-(2-(6-(3-chloro-2-methyl-phenoxy)-5-fluoro-pyrimidin-4-yloxy)-phenyl)-2-methoxy-imino-N-methyl-acetamide, 3-methoxy-2-(2-(N-(4-methoxy-phenyl)-cyclopropane-carboximidoylsulfanylmethyl)-phenyl)-acrylic acid methyl ester, methyl (2-chloro-5-[1 -(3-methylbenzyloxyimino)ethyl]benzyl)carbamate and 2-(2-(3-(2,6-di-chlorophenyl)-1-methyl-allylideneaminooxymethyl)-phenyl)-2-methoxyimino-N-methyl-acetamide;
   B) carboxamides
      - carboxanilides: benalaxyl, benalaxyl-M, benodanil, bixafen, boscalid, carboxin, fenfuram, fenhexamid, flutolanil, furametpyr, isopyrazam, isotianil, kiralaxyl, mepronil, metalaxyl, metalaxyl-M (mefenoxam), ofurace, oxadixyl, oxycarboxin, penthiopyrad, sedaxane, tecloftalam, thifluzamide, tiadinil, 2-amino-4-methyl-thiazole-5-carbox-anilide, 2-chloro-N-(1,1,3-trimethyl-indan-4-yl)-nicotinamide, N-(2',4'-difluorobiphe-nyl-2-yl)-3-difluoromethyl-1-methyl-1H-pyrazole-4-carboxamide, N-(2',4'-dichlorobi-phenyl-2-yl)-3-difluoromethyl-1-methyl-1 H-pyrazole-4-carboxamide, N-(2',5'-di-fluorobiphenyl-2-yl)-3-difluoromethyl-1-methyl-1H-pyrazole-4-carboxamide, N-(2',5'-dichlorobiphenyl-2-yl)-3-difluoromethyl-1-methyl-1H-pyrazole-4-carboxamide, N-(3',5'-difluorobiphenyl-2-yl)-3-difluoromethyl-1-methyl-1H-pyrazole-4-carboxamide, N-(3'-fluorobiphenyl-2-yl)-3-difluoromethyl-1-methyl-1H-pyrazole-4-carboxamide, N-(3'-chlorobiphenyl-2-yl)-3-difluoromethyl-1-methyl-1H-pyrazole-4-carboxamide, N-(2'-fluorobiphenyl-2-yl)-3-difluoromethyl-1-methyl-1H-pyrazole-4-carboxamide, N-(2'-chlorobiphenyl-2-yl)-3-difluoromethyl-1-methyl-1H-pyrazole-4-carboxamide, N-(3',5'-dichlorobiphenyl-2-yl)-3-difluoromethyl-1-methyl-1 H-pyrazole-4-carboxamide, N-(3',4',5'-trifluorobiphenyl-2-yl)-3-difluoromethyl-1-methyl-1H-pyrazole-4-carboxamide, N-(2',4',5'-trifluorobiphenyl-2-yl)-3-difluoromethyl-1-methyl-1H-pyrazole-4-carboxamide, N-[2-(1,1,2,3,3,3-hexafluoropropoxy)-phenyl]-3-difluoromethyl-1-methyl-1H-pyrazole-4-carboxamide, N-[2-(1,1,2,2-tetrafluoro-ethoxy)-phenyl]-3-difluoromethyl-1-methyl-1H-pyrazole-4-carboxamide, N-(4'-tri-fluoromethylthiobiphenyl-2-yl)-3-difluoromethyl-1-methyl-1H-pyrazole-4-carboxamide, N-(2-(1,3-dimethyl-butyl)-phenyl)-1,3-dimethyl-5-fluoro-1 H-pyrazole-4-carboxamide, N-(2-(1,3,3-trimethyl-butyl)-phenyl)-1,3-dimethyl-5-fluoro-1H-pyrazole-4-carboxamide, N-(4'-chloro-3',5'-difluoro-biphenyl-2-yl)-3-difluoromethyl-1-methyl-1 H-pyrazole-4-carboxamide, N-(4'-chloro-3',5'-difluoro-biphenyl-2-yl)-3-trifluoromethyl-1-methyl-1H-pyrazole-4-carboxamide, N-(3',4'-dichloro-5'-fluoro-biphenyl-2-yl)-3-trifluoromethyl-1-methyl-1 H-pyrazole-4-carboxamide, N-(3',5'-difluoro-4'-methyl-biphenyl-2-yl)-3-difluoromethyl-1-methyl-1H-pyrazole-4-carboxamide, N-(3',5'-difluoro-4'-methyl-biphenyl-2-yl)-3-trifluoromethyl-1-methyl-1H-pyrazole-4-carboxamide, N-[1,2,3,4-tetrahydro-9-(1-methylethyl)-1,4-methanonaphthalen-5-yl]-3-(difluoromethyl)-1-methyl-1H-pyrazole-4-carboxamide;
      - carboxylic morpholides: dimethomorph, flumorph, pyrimorph;
      - benzoic acid amides: flumetover, fluopicolide, fluopyram, zoxamide, N-(3-Ethyl-3,5,5-trimethyl-cyclohexyl)-3-formylamino-2-hydroxy-benzamide;
      - other carboxamides: carpropamid, dicyclomet, mandiproamid, oxytetracyclin, silthi-of arm and N-(6-methoxy-pyridin-3-yl) cyclopropanecarboxylic acid amide;
   C) azoles
      - triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-(4-chloro-phenyl)-2-([1,2,4]triazol-1-yl)-cycloheptanol;
      - imidazoles: cyazofamid, imazalil, pefurazoate, prochloraz, triflumizol;
      - benzimidazoles: benomyl, carbendazim, fuberidazole, thiabendazole;
      - others: ethaboxam, etridiazole, hymexazole and 2-(4-chloro-phenyl)-N-[4-(3,4-di-methoxy-phenyl)-isoxazol-5-yl]-2-prop-2-ynyloxy-acetamide;
   D) heterocyclic compounds
      - pyridines: fluazinam, pyrifenox, 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine, 2,3,5,6-tetra-chloro-4-methanesulfonyl-pyridine, 3,4,5-trichloropyridine-2,6-di-carbo-nitrile, N-(1-(5-bromo-3-chloro-pyridin-2-yl)-ethyl)-2,4-dichloronicotinamide, N-[(5-bromo-3-chloro-pyridin-2-yl)-methyl]-2,4-dichloro-nicotinamide;
      - pyrimidines: bupirimate, cyprodinil, diflumetorim, fenarimol, ferimzone, mepanipyrim, nitrapyrin, nuarimol, pyrimethanil;
      - piperazines: triforine;
      - pyrroles: fenpiclonil, fludioxonil;
      - morpholines: aldimorph, dodemorph, dodemorph-acetate, fenpropimorph, tridemorph;
      - piperidines: fenpropidin;
      - dicarboximides: fluoroimid, iprodione, procymidone, vinclozolin;
      - non-aromatic 5-membered heterocycles: famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester;
      - others: acibenzolar-S-methyl, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quin-oxygen, triazoxide, tricyclazole, 2-butoxy-6-iodo-3-propylchromen-4-one, 5-chloro-1-(4,6-dimethoxy-pyrimidin-2-yl)-2-methyl-1 H-benzoimidazole, 5-chloro-7-(4-methyl-piperidin-1-yl)-6-(2,4,6-trifluorophenyl)-[1,2,4]triazolo[1,5-a]pyrimidine, 6-(3,4-di-chloro-phenyl)-5-methyl-[1,2,4]triazolo[1,5-a]pyrimidine-7-ylamine, 6-(4-tert-butylphenyl)-5-methyl-[1,2,4]triazolo[1,5-a]pyrimidine-7-ylamine, 5-methyl-6-(3,5,5-tri-methyl-hexyl)-[1,2,4]triazolo[1,5-a]pyrimidine-7-ylamine, 5-methyl-6-octyl-[1,2,4]tri-azolo[1,5-a]pyrimidine-7-ylamine, 6-methyl-5-octyl-[1,2,4]triazolo[1,5-a]pyrimidine-7-ylamine, 6-ethyl-5-octyl-[1,2,4]triazolo[1,5-a]pyrimidine-7-ylamine, 5-ethyl-6-octyl-[1,2,4]triazolo[1,5-a]pyrimidine-7-ylamine, 5-ethyl-6-(3,5,5-trimethyl-hexyl)-[1,2,4]tri-azolo[1,5-a]pyrimidine-7-ylamine, 6-octyl-5-propyl-[1,2,4]triazolo[1,5-a]pyrimidine-7-ylamine, 5-methoxymethyl-6-octyl-[1,2,4]triazolo[1,5-a]pyrimidine-7-ylamine, 6-octyl-5-trifluoromethyl-[1,2,4]triazolo[1,5-a]pyrimidine-7-ylamine and 5-trifluoro-methyl-6-(3,5,5-trimethyl-hexyl)-[1,2,4]triazolo[1,5-a]pyrimidin-7-ylamine;
   E) carbamates
      - thio- and dithiocarbamates: ferbam, mancozeb, maneb, metam, methasulphocarb, metiram, propineb, thiram, zineb, ziram;
      - carbamates: benthiavalicarb, diethofencarb, iprovalicarb, propamocarb, propamocarb hydrochlorid, valiphenal and N-(1-(1-(4-cyano-phenyl)ethanesulfonyl)-but-2-yl) carbamic acid-(4-fluorophenyl) ester;
   F) other active substances
      - guanidines: guanidine, dodine, dodine free base, guazatine, guazatine-acetate, iminoctadine, iminoctadine-triacetate, iminoctadine-tris(albesilate);
      - antibiotics: kasugamycin, kasugamycin hydrochloride-hydrate, streptomycin, poly-oxine, validamycin A;
      - nitrophenyl derivates: binapacryl, dinobuton, dinocap, nitrthal-isaprapyl, tecnazen, organometal compounds: fentin salts, such as fentin-acetate, fentin chloride or fentin hydroxide;
      - sulfur-containing heterocyclyl compounds: dithianon, isoprothiolane;
      - organophosphorus compounds: edifenphos, fosetyl, fosetyl-aluminum, iprobonfos, phosphorous acid and its salts, pyrazophos, tolclofos-methyl;
      - organochlorine compounds: chlorothalonil, dichlofluanid, dichlorophen, flusulfamide, hexachlorobenzene, pencycuron, pentachlorphenole and its salts, phthalide, quinto-zene, thiophanate-methyl, tolylfluanid, N-(4-chloro-2-nitro-phenyl)-N-ethyl-4-methyl-benzenesulfonamide;
      - inorganic active substances: Bordeaux mixture, copper acetate, copper hydroxide, copper oxychloride, basic copper sulfate, sulfur;
      - others: biphenyl, bronopol, cyflufenamid, cymoxanil, diphenylamin, metrafenone, miildiamycin, oxin-copper, prohexadione-r-alcium, spiroxamine, tolylfluanid, N-(cyclo-propylmothoxyimino-(6-difluoro-methoxy-2,3-difluoro-phenyl)-methyl)-2-phenyl acatamide, N'-(4-(4-chloro-3-trifiuoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethyl-silanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydro-naphthalen-9-yl-amide, acetic acid 6-tert.-butyl-8-fluoro-2,3-dimethyl-quinolin-4-yl ester and methoxy-acetic acid 6-tert-butyl-8-fluoro-2,3-dimethyl-quinolin-4-yl ester.
   G) growth regulators
      abscisic acid, amidochlor, ancymidol, 6-benzylaminopurine, brassinolide, butralin, chlormequat (chlormequat chloride), choline chloride, cyclanilide, daminozide, dike-gulac, dimethipin, 2,6-dimethylpuridine, ethephon, flumetralin, flurprimidol, fluthiacet, forchlorfenuron, gibberellic acid, inabenfide, indole-3-acetic acids, maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;
   H) herbicides comprising
      - acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
      - amino acid derivatives: bilanafos, glyphosate, glufosinate, sulfosate;
      - aryloxyphenoxypropionates: clodinafop, cyhalofop-butyl, fenoxaprop, fluazifop, haloxyfop, metamifop, propaquizafop, quizalofop, quizalofop-P-tefuryl;
      - Bipyridyls: diquat, paraquat;
      - (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
      - cyclohexanediones: butroxydim, clethodim, cycloxydim, profoxydim, sethoxydim, tepraloxydim, tralkoxydim;
      - dinitroanilines: benfiuralin, ethalfluralin, oryzalin, pendimethalin, prodiamine, trifluralin;
      - diphenyl ethers: acifluorfen, aclonifen, bifenox, diclofop, ethoxyfen, fomesafen, lactofen, axyfluarfen;
      - hydroxybenzonitriles: bomoxynil, dichlobenil, ioxynil;
      - imidazolinones: imazamethabenz, imazamox, imazapic, imazapyr, imazaquin, imazethapyr;
      - phenoxy acetic acids: clomeprop, 2,4-dichlorophenoxyacetic acid (2,4-D), 2,4-DB, dichlorprop, MCPA, MCPA-thioethyl, MCPB, Mecoprop;
      - pyrazines: chloridazon, flufenpyr-ethyl, fluthiacet, norflurazon, pyridate;
      - pyridines: aminopyralid, clopyralid, diflufenican, dithiopyr, fluridone, fluroxypyr, picloram, picolinafen, thiazopyr;
      - sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
      - triazines: ametryn, atrazine, cyanazine, dimethametryn, ethiozin, hexazinone, metamitron, metribuzin, prometryn, simazine, terbuthylazine, terbutryn, triaziflam;
      - ureas: chlorotoluron, daimuron, diuron, fluometuron, isoproturon, linuron, metha-benzthiazuron,tebuthiuron;
      - other acetolactate synthase inhibitors: bispyribac-sodium, cloransufam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyrimi-nobac-methyl, pyrimisulfan, pyrithiobac, pyroxasulfone, pyroxsulam;
      - others: amicarbazone, aminotriazole, anilofos, beflubutamid, benazolin, bencarba-zone, benfluresate, benzofenap, bentazone, benzobicyclon, bromacil, bromobutide, butafenacil, butamifos, cafenstrole, carfentrazone, cinidon-ethlyl, chlorthal, cinmethylin, clomazone, cumyluron, cyprosulfamide, dicamba, difenzoquat, diflufenzopyr, *Drechslera monoceras,* endothal, ethofumesate, etobenzanid, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, 4-hydroxy-3-[2-(2-methoxy-ethoxymethyl)-6-trifluoromethyl-pyridine-3-carbonyl]-bicyclo[3.2.1]oct-3-en-2-one, (3-[2-chloro-4-fluoro-5-(3-methyl-2,6-dioxo-4-trifluoromethyl-3,6-dihydro-2H-pyrimidin-9-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxyphenyl)-pyridine-2-carboxylic acid methyl ester, and 4-amino-3-chloro-6-(4-chloro-3-dimethylamino-2-fluoro-phenyl)-pyridine-2-carboxylic acid methyl ester.
   I) Insecticides or acaricides or ematicides selected from
      M.1. Organo(thio)phosphates: acephate, azamethiphos, azinphos-ethyl, azinphosmethyl, chlorethoxyfos, chlorfenvinphos, chlormephos, chlorpyrifos, chlorpyrifosmethyl, coumaphos, cyanophos, demeton-S-methyl, diazinon, dichlorvos/ DDVP, dicro-tophos, dimethoate, dimethylvinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
      M.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate;
      M.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, betacyfluthrin, cyhalothrin, lambda-cyhalothrin, gamma-cyhalothrin, cypermethrin, alphacypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, metofluthrin, permethrin, phenothrin, prallethrin, profluthrin, pyrethrin (pyrethrum), resmethrin, silafluofen, tefluthrin, tetramethrin, tralomethrin, transfluthrin;
      M.4. Juvenile hormone mimics: hydroprene, kinoprene, methoprene, fenoxycarb, pyriproxyfen;
      M.5. Nicotinic receptor agonists/antagonists compounds: acetamiprid, bensultap, cartap hydrochloride, clothianidin, dinotefuran, imidacloprid, thiamethoxam, nitenpyram, nicotine, spinosad (allosteric agonist), spinetoram (allosteric agonist), thiacloprid, thiocyclam, thiosultap-sodium and AKD1022.
      M.6. GABA gated chloride channel antagonist compounds: chlordane, endosulfan, gamma-HCH (lindane); ethiprole, fipronil, pyrafluprole, pyriprole
      M.7. Chloride channel activators: abamectin, emamectin benzoate, milbemectin, lepimectin;
      M.8. METII compounds: fenazaquin, fenpyroximate, pyrimidifen, pyridaben, tebufenpyrad, tolfenpyrad, flufenerim, rotenone;
      M.9. METI II and III compounds: acequinocyl, fluacyprim, hydramethylnon;
      M.10. Uncouplers of oxidative phosphorylation: chlorfenapyr, DNOC;
      M.11. Inhibitors of oxidative phosphorylation: azocyclotin, cyhexatin, diafenthiuron, fenbutatin oxide, propargite, tetradifon;
      M.12. Moulting disruptors: cyromazine, chromafenozide, halofenozide, methoxyfenozide, tebufenozide;
      M.13. Synergists: piperonyl butoxide, tribufos;
      M.14. Sodium channel blocker compounds: indoxacarb, metaflumizone;
      M.15. Fumigants: methyl bromide, chloropicrin sulfuryl fluoride;
      M.16. Selective feeding blockers: crylotie, pymetrozine, flonicamid;
      M.17. Mite growth inhibitors: clofentezine, hexythiazox, etoxazole;
      M.18. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzurorr, triflumuron;
      M.19. Lipid biosynthesis inhibitors: spirodiclofen, spiromesifen, spirotetramat;
      M.20. Octapaminergic agonsits: amitraz;
      M.21. Ryanodine receptor modulators: flubendiamide; (R)-, (S)- 3- Chlor-N1-{2-methyl-4-[1,2,2,2 tetrafluor-1-(trifluormothyl)ethyl]phenyl}-N2-(1-methyl-2-methylsulfonylethyl)phthalamid (M21.1)
      M.22. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, organic sulfur compounds, tartar emetic, sulfoxaflor, 4-But-2-ynyloxy-6-(3,5-dimethyl-piperidin-1-yl)-2-fluoro-pyrimidine (M22.1), 3-Benzoylamino-N-[2,6-dimethyl-4-(1,2,2,2-tetrafluoro-1-trifluoromethyl-ethyl)-phenyl]-2-fluoro-benzamide (M22.2), 4-[5-(3,5-Dichloro-phenyl)-5-trifluoromethyl-4,5-dihydro-isoxazol-3-yl]-2-methyl-N-pyridin-2-ylmethyl-benzamide (M22.3),4-[5-(3,5-Dichloro-phenyl)-5-trifluoromethyl-4-[5-dihydro-isoxazol-3-yl]-2-methyl-N-(2,2,2-trifluoro-ethyl)-benzamide (M22.4),4-[5-(3,5-Dichloro-phenyl)-5-trifluoromethyl-4,5-dihydro-isoxazol-3-yl]-2-methyl-N-thiazol-2-ylmethyl-benzamide (M22.5), 4-[5-(3,5-Dichloro-phenyl)-5-trifluoromethyl-4,5-dihydro-isoxazol-3-yl]-2-methyl-N-(tetrahydrofuran-2-ylmethyl)-benzamide (M22.6), 4-{[(6-Bromopyrid-3-yl)methyl] (2-fluoroethyl)amino}furan-2(5H)-on (M22.7), 4-{[(6-Fluoropyrid-3-yl)methyl](2,2-difluoroethyl)amino}furan-2(5H)-on(M22.8), 4-{[(2-Chloro1,3-thiazolo-5-yl)methyl](2-fluoroethyl)amino}furan-2(5H)-on (M22.9), 4-{[(6-Chloropyrid-3-yl)methyl](2-fluoroethyl)amino}furan-2(5H)-on (M22.10), 4-{[(6-Chloropyrid-3-yl)methyl](2,2-difluoroethyl)amino}furan-2(5H)-on(M22.11), 4-{[(6-Chloro-5-fluoropyrid-3-yl)methyl](methyl)amino}furan-2(5H)-on(M22.12), 4-{[(5,6-Dichloropyrid-3-yl)methyl](2-fluoroethyl)amino}furan-2(5H)-on(M22.13), 4-{[(6-Chloro-5-fluoropyrid-3-yl)methyl](cyclopropyl)amino}furan-2(5H)on(M22.14), 4-{[(6-Chloropyrid-3-yl)methyl](cyclopropyl)amino}furan-2(5H)-on(M22.15), 4-{[(6-Chloropyrid-3-yl)methyl](methyl)amino}furan-2(5H)-on(M22.16), Cyclopropaneacetic acid, 1.1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a, 12b-trimethyl-11-oxo-9-(3-pyridinyl)-2H,11H-naphtho[2,1-b]pyrano[3,4-e]pyran-3,6-diyl] ester(M22.17), 8-(2-Cyclopropylmethoxy-4-methyl-phenoxy)-3-(6-methyl-pyridazin-3-yl)-3-aza-bicyclo[3.2.1]octane(M22.18), M.23. N-R'-2,2-dihalo-1-R"cyclo-propanecarboxamide-2-(2,6-dichloro-a,a,a-trifluoro-p-tolyl)hydrazone or N-R'-2,2-di(R"')propionamide-2-(2,6-dichloro-α,α,α-trifluoro-p-tolyl)-hydrazone, wherein R' is methyl or ethyl, halo is chloro or bromo, R" is hydrogen or methyl and R'" is methyl or methyl;
      M.24. Anthranilamides: chloranthraniliprole,cyantraniliprole, 5-Bromo-2-(3-chloro-pyridin-2-yl)-2H-pyrazole-3-carboxylic acid [4-cyano-2-(1-cyclopropyl-ethylcarbamoyl)-6-methyl-phenyl]-amide (M24.1),5-Bromo-2-(3-chloro-pyridin-2-yl)-2H-pyrazole-3-carboxylic acid [2-chloro-4-cyano-6-(1-cyclopropyl-ethylcarbamoyl)-phenyl]-amide (M24.2), 5-Bromo-2-(3-chloro-pyridin-2-yl)-2H-pyrazole-3-carboxylic acid [2-bromo-4-cyano-6-(1-cyclopropyl-ethylcarbamoyl)-phenyl]-amide(M24.3), 5-Bromo-2-(3-chloro-pyridin-2-yl)-2H-pyrazole-3-carboxylic acid [2-bromo-4-chloro-6-(1-cyclopropyl-ethylcarbamoyl)-phenyl]-amide(M24.4), 5-Bromo-2-(3-chloro-pyridin-2-yl)-2H-pyrazole-3-carboxylic acid [2,4-dichloro-6-(1-cyclopropyl-ethylcarbamoyl)-phenyl]-amide (M24.5), 5-Bromo-2-(3-chloro-pyridin-2-yl)-2H-pyrazole-3-carboxylic acid [4-chloro-2-(1-cyclopropyl-ethylcarbamoyl)-6-methyl-phenyl]-amide (M24.6),
      M.25. Malononitrile compounds: CF₂HCF₂CF₂CF₂CH₂C(CN)₂CH₂CH₂CF₃, (2-(2,2,3,3,4,4,5,5-octafluoropentyl)-2-(3,3,3-trifluoro-propyl)malononitrile), CF₂HCF₂CF₂CF₂CH₂C(CN)₂CH₂CH₂CF₂CF₃ (2-(2,2,3,3,4,4,5,5-octafluorophenyl)-2-(3,3,4,4,4-pentafluorobutyl)-malonodinitrile);
      M.26. Microbial disruptors: Bacillus thuringiensis subsp. Israelensi, Bacillus sphaericus, Bacillus thuringiensis subsp. Aizawai, Bacillus thuringiensis subsp. Kurstaki, Bacillus thuringiensis subsp. Tenebrionis;

Thioamides of formula M6.1 and their preparation have been described in WO 98/28279. Lepimectin is known from Agro Project, PJB Publications Ltd, November 2004. Benclothiaz and its preparation have been described in EP-A1 454621. Methida-thion and Paraoxon and their preparation have been described in Farm Chemicals Handbook, Volume 88, Meister Publishing Company, 2001. Metaflumizone and its preparation have been described in EP-A1 462 456. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. AKD 1022 and its preparation have been described in US 6300348. Chlor-anthraniliprole has been described in WO 01/70671, WO 03/015519 and WO 05/118552. The anthranilamides M 24.1 to M 24.6 have been described in WO 2008/72743 and WO 200872783. The phthalamide M 21.1 is known from WO 2007/101540. Cyflumetofen and its preparation have been described in WO 04/080180. The aminoquinazolinone compound pyrifluquinazon has been described in EP A 109 7932. The alkynylether compound M22.1 is described e.g. in JP 2006131529. Organic sulfur compounds have been described in WO 2007060839. The carboxamide compound M 22.2 is known from WO 2007/83394. The oxazoline compounds M 22.3 to M 22.6 have been described in WO 2007/074789. The furanon compounds M 22.7 to M 22.16 have been described eg. in WO 2007/115644. The pyripyropene derivative M 22.17 has been described in WO 2do 53 and WO 2008/108491. The pyridazin compound M 22.18 has been described in JP 2008/115155. The malononitrile compounds have been described in WO 02/089579, WO 02/090320, WO 02/090321, WO 04/006677, WO 05/068423, WO 05/068432 and WO 05/063694.

If a herbicide is used for seed treatment, the herbicide is preferably applied on the respective herbicide tolerant plant. Examples of suitable transgenic plants resistant to herbicides are mentioned above-
To prevent damage by the herbicide by seed treatment, the respective herbicide can be combined with a suitable safener to prevent phytotoxic damage by the herbicide. Suitable safeners can be selected from the following listing: 8-quinolinyl-oxy acetic acids (such as cloquintocet-mexyl), 1-phenyl-5-haloalkyl-1,2,4-triazole-3-carboxylic acids (such as fenchlorazole and fenchlorazole-ethyl), 1-phenyl-5-alkyl-2-pyrazoline-3,5-dicarboxylic acid (such as mefenpyr and mefenpyr-diethyl), 4,5-dihydro-5,5-diaryl-1,2-oxazole-3-carboxylic acids (such as isoxadifen and isoxadifen-ethyl), dichloroacetam-ides (such as dichlormid, furilazole, dicyclonon and benoxacor), alpha-(alkoxyimino)-benzeneacetonitrile (such as cyometrinil and oxabetrinil), acetophenone oximes (such as fluxofenim), 4,6-dihalogeno-2-phenylpyrimidines (such as fenclorim), N-((4-alkylcarbamoyl)-phenylsulfonyl)-2-benzamides (such as cyprosulfamide), 1,8-naphthalic anhydride, 2-halo-4-haloalkyl-1,3-thiazole-5-carboxylic acids and 2-halo-4-haloalkyl-1,3-thiazole-5-carboxylates (such as flurazole), N-alkyl-O-phenyl carbamates (such as mephenate), N-alkyl-N'-aryl ureas (such as daimuron and cumyluron), S-alkyl-N-alkyl-thiocarbamates (such as dimepiperate) and phosphorothioates (such as dietho-late) as well as their agriculturally useful salts; as well as their agriculturally useful derivaties, such as amides, esters and thioesters in case of present carboxylic acid functions.

Alternatively, the seed material can be coated beforehand with an active substance-free polymer film. Suitable methods are known to the person skilled in the art. For example, WO 04/049778 describes a method in which, in a first step, the seed material is coated with an active substance-free polymer film before applying a dressing formulation. In addition, potential phytotoxic effects may be avoided using encapsulation technologies for the herbicide in question.

Preferred herbicides, which are used on the respective resistant plant propagation materials are amino acid derivatives such as bilanafos, glyphosate, glufosinate, sulfosate, more preferably glyphosatae and glufosinate, most preferably glyphosate.

Preferred insecticides are sulfoxaflor, acetamiprid, alpha-cypermethrin, clothianidin, fipronil, imidacloprid, spinosad, tefluthrin, thiamethoxam, metaflumizon, beta-cefluthrin, chlorantraniliprole (rynaxypyr), cyantraniliprole (cyazapyr), sulfoxaflor and flubendiamide, more preferably acetamiprid, clothianidin, imidacloprid, thiamethoxam, spinosad, metaflumizone, fipronil, chlorantraniliprole (rynaxypyr) and cyantraniliprole (cyazapyr).

Preferred Fungicides are selected from metalaxyl, mefenoxam, pyrimethanil, epoxiconazole, fluquiconazole, flutriafol, hymexazole, imazalil, metconazole, prochloraz, tebuconazole, triticonazole, iprodione, metiram, thiram, boscalid, carbendazim, silthiofam, fludioxonil, azoxystrobin, , kresoxim-methyl, orysastrobin, pyraclostrobin trifloxystrobin, thiophanate methyl, ipconazole, prothiconazole, difenoconazole, triadimenol, triazoxide, fluoxastrobin, N-(3',4',5'-trifluorobiphenyl-2-yl)- 3-difluoromethyl-1-methyl-1H-pyrazole-4-carboxamide, N-[2-(4'-trifluoromethylthio)-biphenyl]-3-difluoromethyl-1-methyl-1 H-pyrazole-4-carboxamide, bixafen, N-[2-(1,3-dimethylbutyl)-phenyl]-1,3-dimethyl-5-fluoro-1H-pyrazole-4-carboxamide, sedaxane, isopyrazam and penthiopyrad,
more preferably metalaxyl, mefenoxam, epoxiconazole, fluquiconazole, prochloraz, triticonazole, iprodion, thiram, tebuconazole, boscalid, carbendazim, silthiofam, fludioxonil, azoxystrobin, orysastrobin, pyraclostrobin, trifloxystrobin, thiophante methyl, ipconazole, prothiocaonazole, difenoconazole, N-(3',4',5'-trifluorobiphenyl-2-yl)- 3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane and penthiopyrad.

The present invention comprises a method for controlling pests, that means animal pests and/or harmful fungi, or weeds, wherein plant propagation materials (preferably seed) are treated with sticker according to the invention and at least one fungicide or insecticide, wherein preferably the sticker is selected from sticker VII.

The present invention further comprises a method for regulating the growth of plants and/or for controlling unwanted vegetation, that means animal pests and/or harmful fungi, or weeds, wherein plant propagation materials (preferably seed) are treated with sticker according to the invention and at least one herbicide, wherein preferably the sticker is sticker VII.

Herein, the sticker according to the invention and the at least one pesticide are applied simultaneously, that is jointly or separately, or in succession.

The present invention is further illustrated, but not limited by the following examples:

### Examples

### Examples

All polymer dispersions according to the invention have been synthesized according to the methods described in EP 810274 A.

The monomer composition and glass temperature are given in the table below.

| Table I | | b) | c) | b) | a) | a) | a) |
|---|---|---|---|---|---|---|---|
| | Tg | MMA⁽¹⁾ | BA⁽²⁾ | S⁽³⁾ | AAM⁽⁴⁾ | AA⁽⁵⁾ | MMA⁽⁵⁾ |
| Polymer 5 | 24 | | 50 | 50 | 1-2 | 2-3 | |
| Polymer 6 | 17 | | 45-50 | 45-50 | 1-2 | 3-5 | |

| | | | | | | | |
|---|---|---|---|---|---|---|---|
| ⁽¹⁾ Methyl methacrylate ⁽²⁾ Butyl acrylate ⁽³⁾ Strylene ⁽⁴⁾ Acrylic amide ⁽⁵⁾ Acrylic acid ⁽⁶⁾Methacrylic acid | | | | | | | |

Treatments were performed with slurries prepared by mixing 40 g of a commercially available FS formulation comprising 500g/L fipronil as pesticide, 10 g of a sticker and diluting the resulting mixture to 100 mL.

### Seed treatment compositions

Ready-to-use treatment slurries were be prepared by mixing a commercial FS formulation (for example commercial available FS formulation comprising 500g/L fipronil as pesticide) with 10 mL of sticker and diluting the resulting mixture with water to 100 mL.

Seed treatment experiments were carried out with the slurries by applying 20 g slurry to 2 kg untreated maize in a batch treater from SATEC. The seeds were stored in a conditioning cabinet for 24 h at 20°C and 50% r.h. prior to the treatment. The batch treater moved the seeds following the rotor stator principle. The slurry was applied on the seeds via a spinning disc, being dosed with a peristaltic pump. 30 s after treatment start, the treated seeds were discharged from the treater.

### Dust measurements

The dust measurements were performed one day after the above mentioned treatment in the same SATEC batch treater. Treated seeds are stored in a conditioning cabinet for 24 h at 20°C and 50% r.h. The rotation speed and air flow rate of the treater was the same as during treatment. Conditioning of the treater was done by turning on the empty treater for 10 minutes. A pre-weighted filter (Fisherbrand glassfiber filter 38 mm, Product No. FB59403) was placed in a nutsche filter connected to a vacuum pump and located in the treater cover. The pump sucked a part of the air blown into the treater incl. potential dust through the filter. The running treater was filled with 1 kg of treated seeds. The pump is stopped after 30 s, the filter weighed again and the dust per 100 kg of seed calculated.
The test results correlate well with measurements done with the Heubach dustmeter (Heubach GmbH).
Results are given in Table II set forth below.

### Planting precision

The test stand for analysis of the sowing behavior, i.e. planting precision of treated seeds was based on a commercial John Deere pneumatic sowing machine unit equipped with photo-optical sensors and a computer. A profiling program analyzed seed delivery, precision of sowing and seed placement.

Before the test, the right sowing disk suitable for the size and shape of the treated seeds had to be chosen and built into the device. The inlet of the sowing machine unit was equipped with a funnel, where seeds to be tested are filled in.
Each test run per replicate accounts for 1000 cells, which ideally would result in 1000 seeds delivered. The number of seeds actually delivered per 1000 cells is recorded as well as the number of cells with seeds missing (=skips) and the number of cells with two or more seeds (=doubles, triples etc.). Furthermore, besides the number of seeds delivered at exactly the correct distance in the row, deviations from the optimal seed placement were recorded as well. From these data, the percentage of correctly placed seeds can be determined. Typically, 3 replicates per treatment are assessed, unless high variability occurs.

Results are given in Table II set forth below.

| Polymer | Dust measurement [g/100 kg] | Sowing precision % |
|---|---|---|
| Polymer 5 | 0.08 | 93.1 |
| Polymer 6 | 0.01 | 92.2 |

## Claims

1. A method for treating seeds with at least one sticker comprising
a) a mixture of acrylic acid and acrylamide as comonomer a); and
b) styrene as comonomer b); and
c) n-butyl acrylate as comonomer c)
in polymerized form, wherein the sticker comprises
from 0.05 to 20% by weight of comonomer a), and
from 10 to 90% by weight of comonomer b); and
from 10 to 90% by weight of comonomer c).

2. The method according to claim 1, wherein the sticker comprises
from 0.1 to 10% by weight of comonomer a), and
from 15 to 70% by weight of comonomer b); and
from 40 to 85% by weight of comonomer c).

3. The method according to claim 1, wherein the sticker comprises
from 0.5 to 8% by weight of comonomer a), and
from 18 to 55% by weight of comonomer b); and
from 40 to 85% by weight of comonomer c).

4. The method according to any of claims 1 to 3, wherein the Tg of the sticker is from -30°C to 30°C.

5. The method according to any of claims 1 to 3, wherein the Tg of the sticker is from -20°C to 28°C.

6. The method according to any of claims 1 to 5, wherein the method provides resuction of dust.

7. Use of a sticker according to the definitions of any of claims 1 to 5 for the reduction of dust.

8. A seed dressing formulation comprising
(1) a sticker as defined in any of claims 1 to 5; and
(2) at least one pesticide

9. A kit of parts comprising parts comprising
a) a sticker defined in any of claims 1 to 5; and
b) an agrochemical formulation comprising at least one pesticide, but not comprising a sticker defined in any of claims 1 to 5 as part II.

10. Seed, coated with or containing a sticker as defined in any of claims 1 to 5.

11. A method for regulating the growth of plants and/or for controlling unwanted vegetation, which comprises treating plant propagation material with a sticker as defined in any of claims 1 to 5; and at least one herbicide.

12. A method for controlling pests, which comprises treating seed of useful plants with a sticker as defined in any of claims to 5; and at least one pesticide,

## Patentansprüche

1. Verfahren zum Behandeln von Saatgut mit mindestens einem Haftmittel, umfassend
(a) eine Mischung aus Acrylsäure und Acrylamid als Comonomer a); und
(b) Styrol als Comonomer b); und
(c) n-Butylacrylat als Comonomer c)
in polymerisierter Form, wobei das Haftmittel Folgendes umfasst:
0,05 bis 20 Gew.-% Comonomer a); und
10 bis 90 Gew.-% Comonomer b); und
10 bis 90 Gew.-% Comonomer c).

2. Verfahren nach Anspruch 1, wobei das Haftmittel Folgendes umfasst:
0,1 bis 10 Gew.-% Comonomer a); und
15 bis 70 Gew.-% Comonomer b); und
40 bis 85 Gew.-% Comonomer c).

3. Verfahren nach Anspruch 1, wobei das Haftmittel Folgendes umfasst:
0,5 bis 8 Gew.-% Comonomer a); und
18 bis 55 Gew.-% Comonomer b); und
40 bis 85 Gew.-% Comonomer c).

4. Verfahren nach einem der Ansprüche 1 bis 3, wobei die Tg des Haftmittels -30°C bis 30°C beträgt.

5. Verfahren nach einem der Ansprüche 1 bis 3, wobei die Tg des Haftmittels -20°C bis 28°C beträgt.

6. Verfahren nach einem der Ansprüche 1 bis 5, wobei das Verfahren eine Staubreduktion gewährleistet.

7. Verwendung eines Haftmittels nach den Definitionen nach einem der Ansprüche 1 bis 5 zwecks Staubreduktion.

8. Saatgutbehandlungsformulierung, die Folgendes umfasst:
(1) ein wie in einem der Ansprüche 1 bis 5 definiertes Haftmittel; und
(2) mindestens ein Pestizid.

9. Kit aus Bestandteilen, das Bestandteile umfasst, die Folgendes umfassen:
a) ein in einem der Ansprüche 1 bis 5 definiertes Haftmittel; und
b) eine agrarchemische Formulierung, die mindestens ein Pestizid umfasst, jedoch nicht ein in einem der Ansprüche 1 bis 5 definiertes Haftmittel als Bestandteil II umfasst.

10. Saatgut, das mit einem wie in einem der Ansprüche 1 bis 5 definierten Haftmittel beschichtet ist bzw. ein wie in einem der Ansprüche 1 bis 5 definiertes Haftmittel enthält.

11. Verfahren zum Regulieren des Wachstums von Pflanzen und/oder zum Bekämpfen von unerwünschtem Pflanzenwuchs, das das Behandeln von pflanzlichem Vermehrungsgut mit einem wie in einem der Ansprüche 1 bis 5 definierten Haftmittel und mit mindestens einem Herbizid umfasst.

12. Verfahren zum Bekämpfen von Schädlingen, das das Behandeln von Saatgut von Nutzpflanzen mit einem wie in einem der Ansprüche 1 bis 5 definierten Haftmittel und mit mindestens einem Pestizid umfasst.

## Revendications

1. Procédé pour traiter des semences avec au moins un autocollant comprenant
a) un mélange d'acide acrylique et d'acrylamide en tant que comonomère a) ; et
b) du styrène en tant que comonomère b) ; et
c) de l'acrylate de n-butyle en tant que comonomère c)
sous forme polymérisée, l'autocollant comprenant
de 0,05 à 20 % en poids de comonomère a), et
de 10 à 90 % en poids de comonomère b) ; et
de 10 à 90 % en poids de comonomère c).

2. Procédé selon la revendication 1, l'autocollant comprenant
de 0,1 à 10 % en poids de comonomère a), et
de 15 à 70 % en poids de comonomère b) ; et
de 40 à 85 % en poids de comonomère c).

3. Procédé selon la revendication 1, l'autocollant comprenant
de 0,5 à 8 % en poids de comonomère a), et
de 18 à 55 % en poids de comonomère b) ; et
de 40 à 85 % en poids de comonomère c).

4. Procédé selon l'une quelconque des revendications 1 à 3, dans lequel le Tg de l'autocollant est de -30 °C à 30 °C.

5. Procédé selon l'une quelconque des revendications 1 à 3, dans lequel le Tg de l'autocollant est de -20 °C à 28 °C.

6. Procédé selon l'une quelconque des revendications 1 à 5, le procédé permettant une réduction des poussières.

7. Utilisation d'un autocollant selon les définitions de l'une quelconque des revendications 1 à 5 pour la réduction des poussières.

8. Formulation d'enrobage de semences comprenant (1) un autocollant tel que défini dans l'une quelconque des revendications 1 à 5 ; et (2) au moins un pesticide.

9. Kit de composants comprenant des composants comprenant
(a) un autocollant tel que défini dans l'une quelconque des revendications 1 à 5 ; et
(b) une formulation agrochimique comprenant au moins un pesticide, mais ne comprenant pas un autocollant défini dans l'une quelconque des revendications 1 à 5 en tant que composant II.

10. Semence, enrobée avec ou contenant un autocollant tel que défini dans l'une quelconque des revendications 1 à 5.

11. Procédé pour réguler la croissance de plantes et/ou pour lutter contre une végétation indésirable, qui comprend le traitement de matériau de propagation de plante avec un autocollant tel que défini dans l'une quelconque des revendications 1 à 5 ; et au moins un herbicide.

12. Procédé pour lutter contre des organismes nuisibles, qui comprend le traitement de semences de plantes utiles avec un autocollant tel que défini dans l'une quelconque des revendications 1 à 5 ; et au moins un pesticide.
